# EUROPEAN PATENT SPECIFICATION

(11) **EP 0 454 096 B1**
(45) Date of publication and mention of the grant of the patent: **30.07.1997**
(21) Application number: 91106612.4
(22) Date of filing: 24.04.1991
(51) Int. Cl.: G06F 13/24

(54) **Interrupt control circuit and microcomputer system comprising the same**
Unterbrechungssteuerschaltung und Mikrocomputersystem, das diese enthält
Circuit contrôleur d'interruption et microordinateur le comprenant

(30) Priority: 25.04.1990 JP 109869/90
(43) Date of publication of application: 30.10.1991
(73) Proprietor: MITSUBISHI DENKI KABUSHIKI KAISHA, Tokyo (JP)
(72) Inventor: Egami, Noritaka, c/o Nagasaki Seisakusho, Nagasaki-shi, Nagasaki-ken (JP)
(74) Representative: KUHNEN, WACKER & PARTNER

(56) References cited:
- EP-A- 0 167 827
- EP-A- 0 358 330
- US-A- 4 760 516
- US-A- 4 764 893
- IBM TECHNICAL DISCLOSURE BULLETIN vol. 29, no. 6, 1 November 1986, ARMONK, NY, US pages 2380 - 2381; ANONYMOUS: 'Interrupt sharing for personal computer'
- E.D.N. ELECTRONIC DESIGN NEWS vol. 27, no. 15, 4 August 1982, BOSTON, MA, US pages 137 - 142; M. TILDEN ET AL: 'GPIB software configuration determines system performance'

## Description

The present invention relates to an interrupt control circuit and a microcomputer system comprising the same for generating an interrupt request signal for a control processing unit operating under an edge-trigger mode.

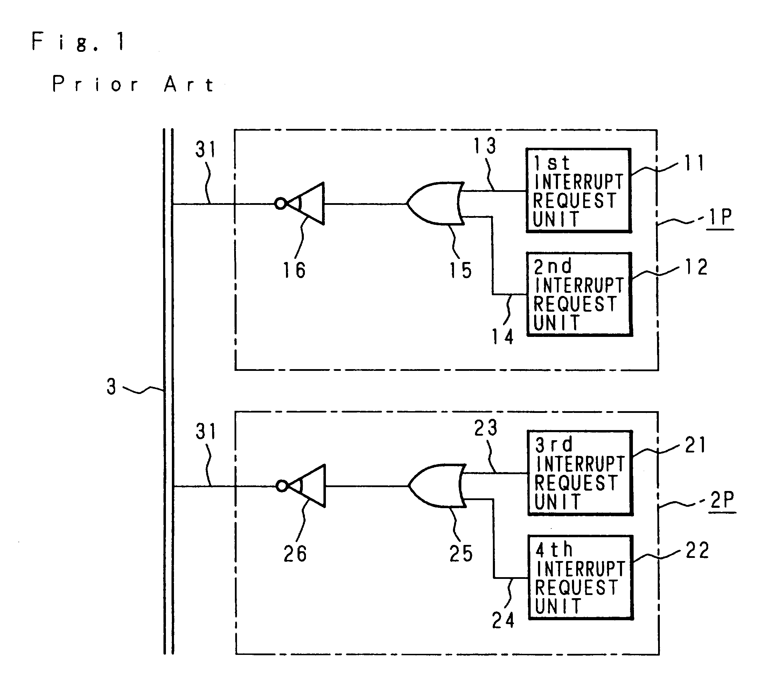

Fig. 1 is a block diagram showing an example of a configuration of a conventional interrupt control circuit.

In Fig. 1, reference characters 1P and 2P respectively designate extension boards as interrupt control circuits.

The extension boards 1P and 2P are respectively connected to a system bus 3 by an interrupt signal line 31 which is one of the signal lines thereof.

The extension boards 1P and 2P are constructed as follows. Reference characters 11 and 12 designate a first and a second interrupt request units provided on the extension board 1P, and numerals 21 and 22 designate third and fourth interrupt request units provided on the extension board 2P. To the respective interrupt request units 11, 12, 21 and 22, the first, second, third and fourth interrupt request lines 13, 14, 23 and 24 are connected respectively.

The first and second interrupt request lines 13 and 14 of the first and second interrupt request units 11 and 12 are inputted to a two-input OR gate 15, and the third and fourth interrupt request lines 23 and 24 of the third and fourth interrupt request units 21 and 22 are inputted to a two-input OR gate 25. The OR gate 15 outputs the OR signal of the interrupt request lines 13 and 14 to an inverter gate 16 of the open collector output, and the OR gate 25 outputs the OR signal of the interrupt request lines 23 and 24 to an inverter gate 26 of the open collector output. Outputs of the inverter gates 16 and 17 are wire-ORed to the system bus 3 via the interrupt signal lines 31.

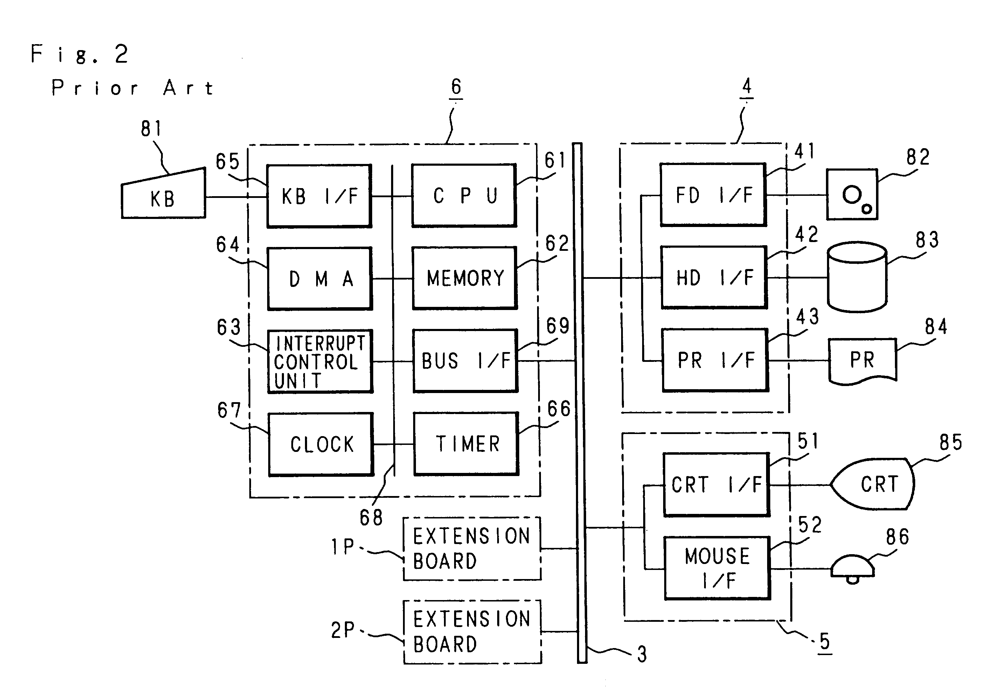

Fig. 2 is a block diagram showing an example of the entire configuration of a microcomputer system in which the extension boards 1P and 2P as the interrupt control circuit thus constructed are built in.

In Fig. 2, reference characters 4 and 5 designate peripheral device control boards and numeral 6 designates a central processing unit board (hereinafter referred to as a CPU board) as a control processing unit. In addition, reference characters 1P and 2P designate the extension boards aforementioned. The peripheral device control boards 4 and 5, CPU board 6 and extension boards 1P and 2P are interconnected by the system bus 3.

In the peripheral device control board 4, a floppy-disk interface 41 for a floppy-disk drive unit 82, a hard-disk interface 42 for a hand-disk unit 83 and a printer interface 43 for a printer 84 are included.

On the peripheral device control board 5, a display interface 51 for a CRT display unit 85 and a mouse interface 52 for a mouse 85 are provided.

In the CPU board 6, a CPU (Central Processing Unit) 61 for executing control processings of the entire system, a memory 62 storing programs and data for the CPU 61, an interrupt control unit 63 for controlling interruption to the CPU 61, a DMA control unit 64 for controlling at Direct Memory Access (DMA), a key-board interface 65 for key-board 81, a timer 66 for timing control, a clock 67 etc. are included. Respective component elements of the CPU board 6 are interconnected by an internal bus 68. The entire CPU board 6 and the system bus 3 are connected by a bus interface 69.

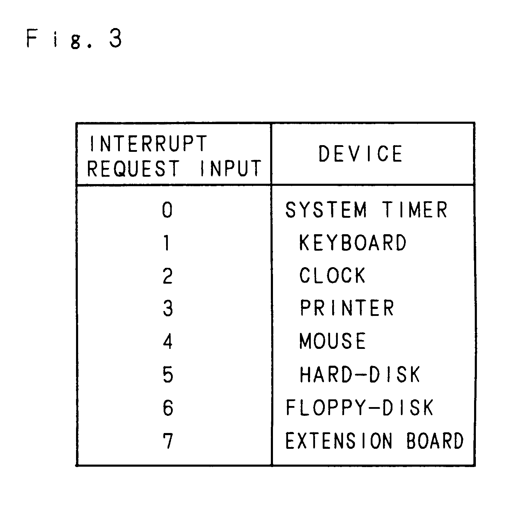

Fig. 3 is an explanatory view showing allocation of the interrupt request input in the microcomputer system thus constructed.

As shown in Fig. 3, the interrupt request input signal is prepared eight from "0" to "7", to seven signals among which from "0" to "6", the system timer 66, key-board 81, clock 67, printer 81, mouse 86, hard-disk unit 83 and floppy-disk unit 83 are already allocated in order. Therefore, the extension boards 1P and 2P use the remaining one signal "7" in common.

Next, the interrupt processing of the conventional microcomputer system constructed as above will be described.

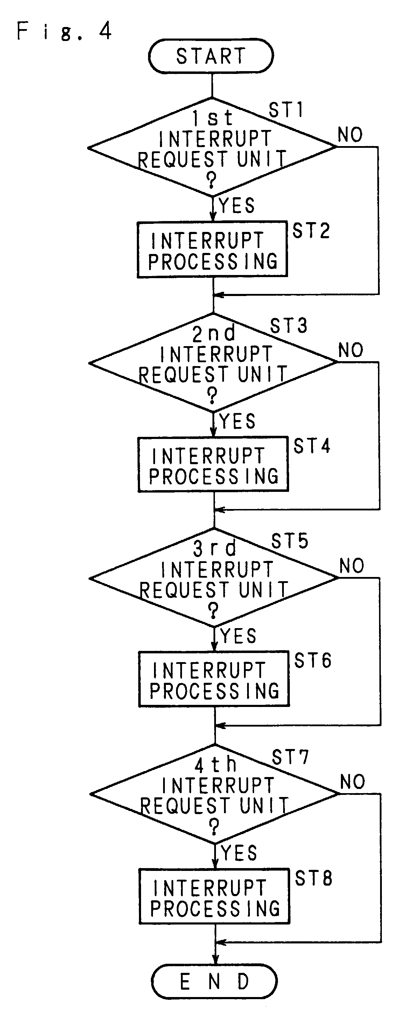

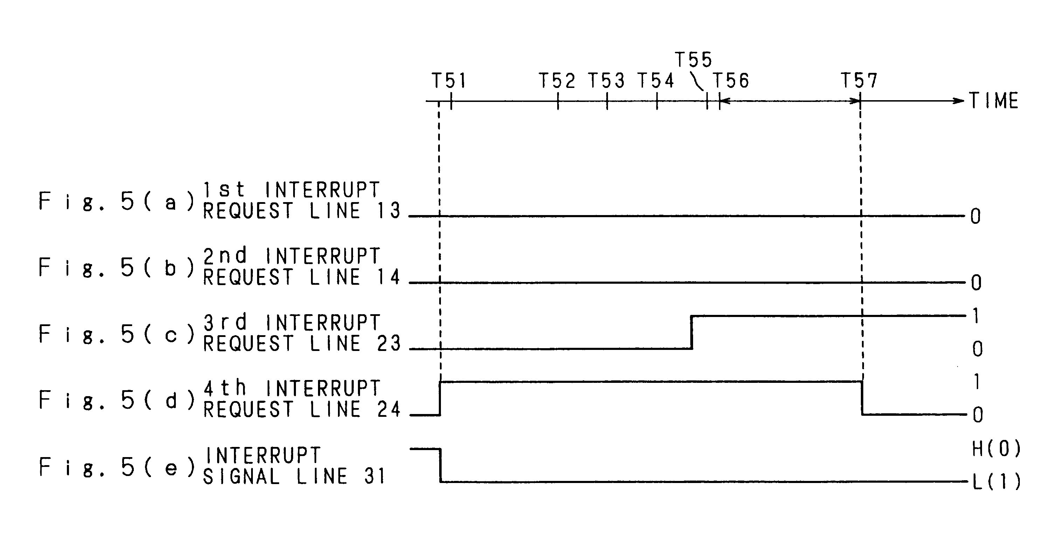

Incidentally, Fig. 4 is a flow chart showing processing sequences for interrupt request from the extension boards 1P and 2P processed by the CPU 61, and Fig. 5 is a timing chart showing the state of respective signals in the extension boards 1P and 2P.

Now, for example, when the interrupt request is generated from the fourth interrupt request unit 22, the fourth interrupt request line 24 of the fourth interrupt request unit 22 shown in Fig. 5(d) turns to a high level and the output of the OR gate 25 also is changed to high level. The output signal of the OR gate 25 is outputted to the interrupt signal line 31 from the inverter gate 26. At this time, since the inverter gate 26 is the open collector output and wire-ORed to the interrupt signal line 31, a level of the interrupt request signal outputted to the interrupt signal line 31 changes, as shown in Fig. 5(e), to a low level which is a request level from a high level which is a normal level.

The interrupt control unit 63 of the CPU board 6 receives the interrupt request signal outputted to the system bus 3 in the manner aforementioned via the bus interface 69, and when detecting an falling edge from the high level to the low level, informs the CPU 61 that the extension board 1P or 2P is generating the interrupt request (at the timing T51).

The CPU 61 upon detecting that the interrupt request is generated, suspends processing executed at that time point for a while, and executes the interrupt processing of the sequences shown in Fig. 4.

Specifically, the CPU 61, first at the timing T52, judges whether the generated interrupt request is from the first interrupt request unit 11 or not (step ST1). In the case where the result is "YES", though the CPU 61 executes interrupt processing for the interrupt request generated from the first interrupt request unit 11 (step ST2), the processing is moved to step ST5 since the judgment result of this case is "NO".

Next, the CPU 61, at timing T53, judges whether the generated interrupt request is from the second interrupt request unit 12 or not (step ST3). In the case where the result of step ST3 is "YES", though the CPU 61 executes interrupt processing for the interrupt request generated from the second interrupt request unit (step ST4), the processing is moved to step ST5 since the judgment result of this case is "NO".

In the same manner, the CPU 61, at timing T55, judges whether the generated interrupt. request is from the fourth interrupt request unit 22 or not (step ST7). In this case, since the result of step ST7 is "YES", the CPU 61, during the period from the timing T56 to the timing T57, executes interrupt processing for interrupt request generated from the fourth interrupt request unit 22 (step ST8), thereby one sequence of interrupt processings are completed.

Upon completion of the above interrupt processings, the CPU 61 again starts the processings being suspended before according to the program instructions, and the fourth interrupt request unit 22 returns the level of the output signal to the fourth interrupt request line 24 from the high level to low level.

Here, in the case where the interrupt request is generated from the third interrupt request unit 21, between the timing T54 where the CPU 61 judges ("NO"), i.e. the interrupt request is not from the third interrupt request unit 21 in step ST5, and the timing T57 where the interrupt processing for interrupt request from the fourth interrupt request unit 22 is completed, as shown in Fig. 5(c), the level of the third interrupt request unit 23 is changed to the high level at that time point. Accordingly, as shown in Fig. 5(e), even after the interrupt processing for interrupt request from the fourth interrupt request unit 22 is completed and the level of the fourth interrupt request line 24 returns to the low level, the interrupt request signal outputted to the interrupt signal line 31 remains at low level and is unchanged.

Since the interrupt control unit 63 of the CPU board 6 is operated in an edge-trigger mode as aforementioned, a change of the interrupt request signal from the normal level to the request level, that is, in this conventional example, a change from the high level to the low level is only detected as the interrupt request. Therefore, the interrupt request from the third interrupt request unit 21 is not accepted by the CPU 61. Furthermore, even when the interrupt request from the third interrupt request unit. 21 is locked as it is, and the interrupt request from the other interrupt request units 11, 12 or 22 is generated thereafter, these can not be accepted.

Though it may be considered to output the interrupt request signal to the interrupt signal line 31 as a one-shot pulse, this interrupt request signal must be sustained until the CPU 61 accepts the interrupt request. Therefore, a technical difficulty is encountered, because it is uncertain how long the one-shot pulse must be sustained.

Since the aforesaid configuration is adopted in the conventional interrupt control circuit, when the interrupt requests from the interrupt request units 11, 12, 21 and 22 using the interrupt signal line 31 in common are generated successively at delicate, timings, there is a possibility that some of them are not accepted by the CPU 61. There is also a difficulty in a system, wherein a rapid response is required because of the necessity of processing all interrupt requests generated simultaneously in the interrupt request units 11, 12, 21 and 22. Meanwhile, in the case where the interrupt signal lines 31 are used in common in a number of interrupt request units, such a problem is encountered that an overhead of interrupt requests generated simultaneously becomes problematic and the number of interrupt requests can not be increased more than a certain extent.

US-A-4,760,516 discloses an interrupt control circuit wherein a plurality of peripheral devices are each connected with a circuitry for signalling an interrupt request to a central computer unit. The circuitry comprises a flip-flop the set input of which is connected to the peripheral device. Further, the reset input of the flip flop is connected to the central computer unit which is additionally connected to circuitry outputs via a common interrupt signal line.

EP-A-0 167 827 discloses an interrupt interface circuit which comprises a pulse generator connected to an external interrupt line shared in common by other similar circuits. This external interrupt line is fed back and latched on a disabling input of the pulse generator so that any pulse on the external interrupt line prevents further pulsing. Active internal interrupt signals can produce a further pulse. This concept intends to eliminate phantom interrupts and to minimize servicing overhead.

US-A-4,764,893 discloses an interrupt interface circuit being connected to a shared interrupt request line. An internally generated interrupt suppresses any further interrupt requests provided that the interrupt request has a minimum duration. The circuitry consists of a plurality of flip-flops and an interrupt handler.

The present invention has been designed in view of the circumstances described above, therefore, it is a primary object thereof to provide an interrupt control circuit and a microcomputer system comprising the same, which is able to, in the case where a plurality of interrupt requests are generated at delicate, timings, accept them reliably and solve the problem of overhead.

The interrupt control circuit according to the present invention comprises the features mentioned in claim 1.

The microcomputer system of the present invention comprises the features mentioned in claim 2.

In the interrupt control circuit and the microcomputer system of the present invention, in the case where the interrupt request is generated from an other interrupt request unit during execution of the requested interrupt processing, when the interrupt request circuit receives a predetermined signal indicating that the interrupt processing being executed is completed from the control processing unit, since the interrupt request signal is once changed forcibly to the normal level, it is changed again to the request level when a plurality of interrupt request signals are outputted, so that the interrupt request is prevented from being locked. In the control processing unit, a plurality of interrupt requests generated at delicate, timings are accepted reliably, thus the problem of overhead is solved.

The above and further objects and features of the invention will more fully by apparent from the following detailed description with accompanying drawings.
Fig. 1 a block diagram showing an example of the configuration of a conventional interrupt control circuit,
Fig. 2 is a block diagram showing an example of the entire configuration of a conventional microcomputer system wherein the interrupt control circuit of the configuration of Fig. 1 is built in,
Fig. 3 is an explanatory view showing allocation of the interrupt request input in the conventional microcomputer system of the configuration of Fig. 2,
Fig. 4 is a flow chart showing processing sequences for interrupt request from an interrupt request circuit processed by a control processing unit (CPU),
Fig. 5 is a timing chart showing states of respective signals in the interrupt control circuit,
Fig. 6 is a block diagram showing one embodiment of the configuration of an interrupt control circuit of the present invention,
Fig. 7 is a block diagram showing an example of the entire configuration of a microcomputer system of the present invention, wherein the interrupt control circuit of the present invention of the configuration shown in Fig. 6 is built in,
Fig. 8 is a flow chart showing interrupt processing sequences for interrupt request from the interrupt control circuit of the present invention processed by the control processing unit (CPU), and
Fig. 9 is a timing chart showing states of respective signals in the interrupt control circuit 2.

In the following, the present invention will be described in detail with reference to the drawings showing its embodiments.

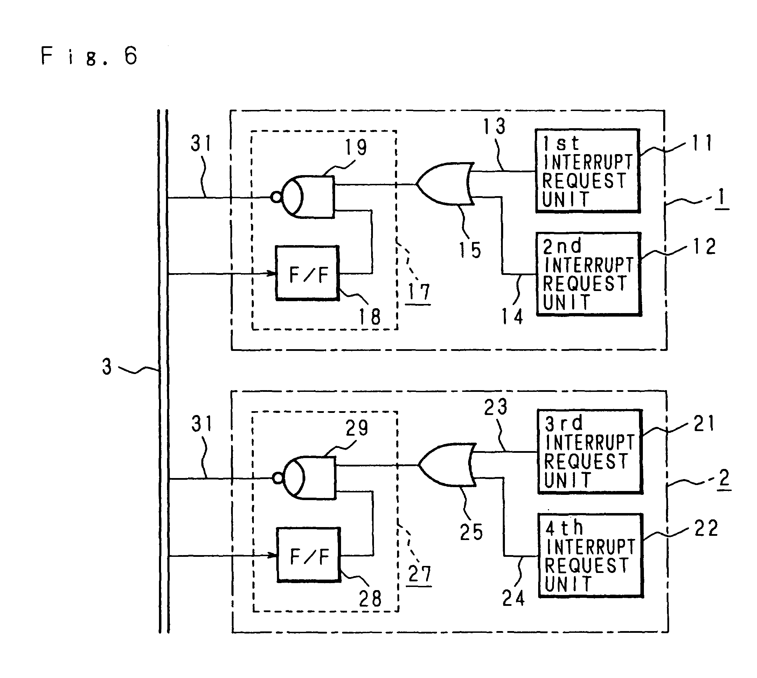

Fig. 6 is a block diagram showing one embodiment of a configuration of an interrupt control circuit of the present invention.

In Fig. 6, reference characters 1 and 2 respectively designate extension boards as interrupt control circuits of the present invention. The extension boards 1 and 2 are respectively connected to a system bus 3 by an interrupt signal line 31 which is one of the signal lines thereof.

The extension boards 1 and 2 are constructed as follows. Reference characters 11 and 12 designate first and second interrupt request units provided on the extension board 1, and numerals 21 and 22 designate third and fourth interrupt request units provided on the extension board 2. To the interrupt request units 11, 12, 21 and 22, first, second, third and fourth interrupt request lines 13, 14, 23 and 24 are connected respectively.

The first and second interrupt request lines 13 and 14 of the first and second interrupt request units 11 and 12 are inputted to a two-input OR gate 15, and the third and fourth interrupt request lines 23 and 24 of the third and fourth interrupt request units 21 and 22 are inputted to a two-input OR gate 25. The OR gate 15 obtains an OR signal by OR logical operation of the interrupt request lines 13 and 14 and outputs it to one input terminal of a NAND gate 19 of the open-collector output of a forced return circuit 17, and the OR gate 25 obtains an OR signal by OR logical operation of the interrupt request lines 23 and 24 and outputs it to one input terminal of a NAND gate 29 of the open collector output of a forced return circuit 27.

The forced return circuits 17 and 27, upon receiving the interrupt completion signal which is outputted when the CPU 61 completes the requested interrupt processing, instantaneously returns the interrupt request signal outputted to the interrupt signal line 31 forcibly to a normal level or a high level.

Specifically, the forced return circuits 17 and 27 are constituted by the aforesaid NAND gates 19 and 29 and flip-flops 18 and 28. To one input terminal of the NAND gates 19 and 29, outputs from the OR gates 15 and 25 are inputted respectively as stated above, and to the other input terminal, output signals of the flip-flops 18 and 28 are inputted. The outputs of the NAND gates 19 and 29 are both connected to the interrupt signal lines 31. Meanwhile, inputs of the flip-flops 18 and 28 are connected to the system bus 3. The flip-flops 18 and 28 are allocated a same address, and function as a flag of the CPU 61. Concretely, the flip-flops 18 and 28 are simultaneously set and reset with the CPU 61 by outputting the signal indicating the completion of requested interrupt processing to the system bus 3 with the address allocated to the flip-flops 18 and 28. The set/reset output of the flip-flops 18 and 28 are given to the NAND gates 19 and 29.

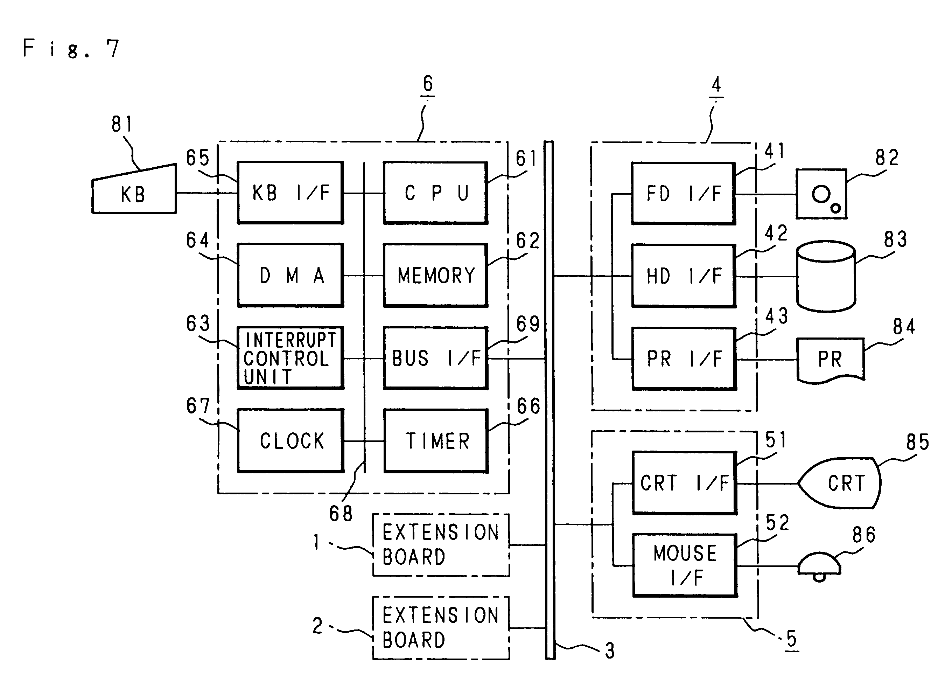

The extension boards 1 and 2 which are the interrupt control circuits of the present invention are, as a block diagram of Fig. 7 showing its configuration, built in a microcomputer system of the present invention having the same configuration as the conventional one shown in Fig. 2 stated above and used, except substituting for the extension boards 1P and 2P. Thus, allocation of the interrupt request input in the microcomputer system of the present invention, wherein the interrupt control circuit of the present invention is built in, is same as the conventional one shown in Fig. 3 as aforementioned.

Next, the interrupt processing of the microcomputer system wherein the interrupt control circuit of the present invention having the aforesaid configuration is built in will be explained.

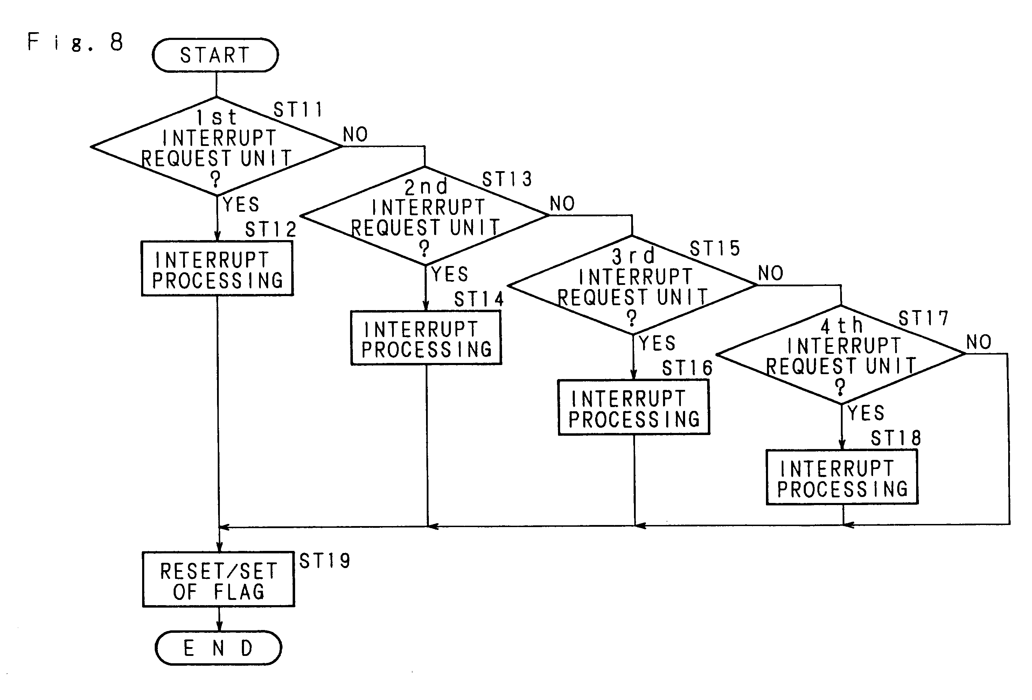

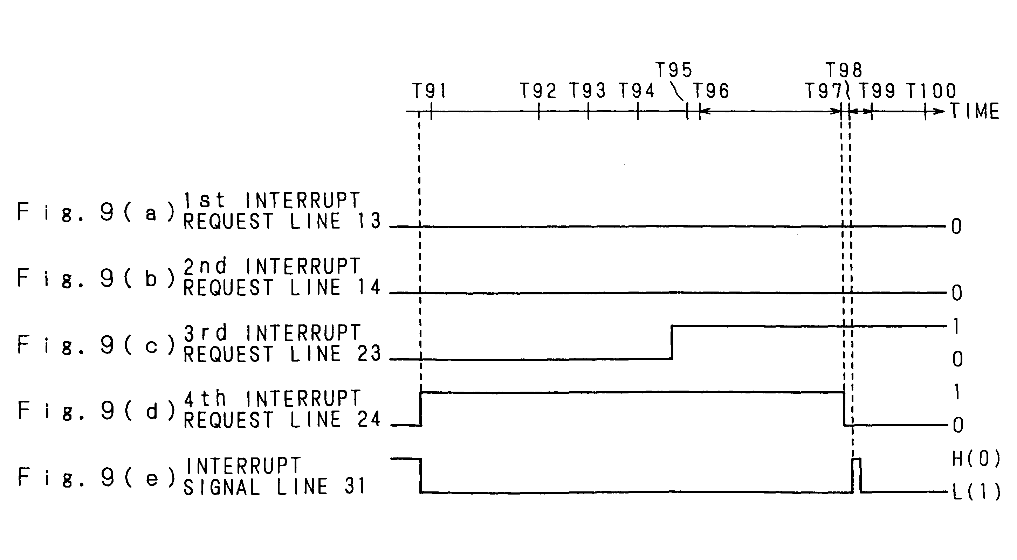

Here, Fig. 8 is a flow chart showing interrupt processing sequences for interrupt request from the extension boards 1 and 2, which are the interrupt control circuits of the present invention processed by the CPU 61, and Fig. 9 is a timing chart showing states of respective signals in the extension boards 1 and 2.

Now, for example, when the interrupt request is generated from the fourth interrupt request unit 22, the fourth interrupt request line 24 of the fourth interrupt request unit 22 is changed to a high level shown in Fig. 9(d). Here, the flip-flops 18 and 28 are usually in the set state, that is, the output signals to the NAND gates 19 and 29 therefrom are in the high level state. Accordingly, though the output signal from the OR gate 25 is outputted as it is to the interrupt signal line 31 from the NAND gate 29, which is an open collector output and wire-ORed to the interrupt signal line 31, so that a level of the interrupt request signal outputted to the interrupt signal line 31 is changed to a low level which is the request level from a high level as the normal level.

The interrupt control unit 63 of the CPU board 6 receives the interrupt request signal outputted to the system bus 3 via the bus interface 69 in the same manner as the conventional case stated above, and when detecting the falling edge from the high level to the low level at timing T91, transmits to the CPU 61 that the interrupt request is generated from the extension board 1 or 2.

Upon detecting that the interrupt request is generated, the CPU 61 suspends the processing being executed at that time point for a while, and executes the interrupt processing of the sequences shown in a flow chart of Fig. 8.

Specifically, the CPU 61, first, at timing T92, judges whether the generated interrupt request is from the first interrupt request unit 11 or not (step ST11). In the case where the result of step ST11 is "YES", the CPU 61 executes the interrupt processing for generated interrupt request from the first interrupt request unit 11 (step ST12), and thereafter processes set/reset of the flag at step ST19, but since this case is "NO", the processing is moved to step ST13.

Next, the CPU 61, at timing T93, judges whether the generated interrupt request is from the second interrupt request unit 12 or not (step ST13). In the case where the result of step ST13 is "YES", the CPU 61 executes the interrupt processing for generated interrupt request from the second interrupt unit 12 (step ST14), and thereafter, processes set/reset of the flag at step ST19, but since this case is "NO", the processing is moved to step ST15.

In the same manner, the CPU 61, at timing T95, judges whether the generated interrupt request is from the fourth interrupt request unit 22 or not (step ST17). In this case, the result of step ST17 is "YES", so that the CPU 61 executes the interrupt processing for generated interrupt request from the fourth interrupt request unit 22 during the timings T96 to the T97 (step ST18). Thereafter, the CPU 61 processes set/reset of the flag at step ST19 during the timings T98 to T99, thereby one sequence of interrupt processings are completed.

Upon completion of the aforesaid interrupt processings, the CPU 61, according to the program instructions, again starts the processing being suspended before, and the fourth interrupt request unit 22 returns the output signal level to the fourth interrupt request line 24 from the high to low level.

Here, in the case where the interrupt request is generated from the third interrupt request unit 21, between the timing T94 where the CPU 61 judges "NO", i.e. the interrupt request is not from the third interrupt request unit 21, and the timing T97 where the interrupt processing for interrupt request from the fourth interrupt request unit 22 is completed, as shown in Fig. 9(c), the level of the third interrupt request unit 23 is changed to the high level at that time point. In the present invention, however, by resetting the flip-flops 18 and 28, the interrupt request signal on the interrupt signal line 31 which is the output of the NAND gates 19 and 29, as shown in Fig. 9(e), instantaneously returns to the high level as the normal level, and immediately thereafter, again changes to the low level as the request level.

Since the interrupt control unit 63 of the CPU board 6 is operated in an edge-trigger mode as stated above, a change of the level of interrupt request signal to the request level from the normal level, or a change to the low level from the high level is only detected as the interrupt request. Therefore, the interrupt request from the third interrupt request unit 21 is also accepted reliably by the CPU 61 at timing T100.

As shown in a flow chart of Fig. 8, whenever the interrupt request from one of the interrupt request units 11, 12, 21 or 22 is processed in step ST12, ST14, ST16 or ST18, a flag is set or reset in step ST19 and a series of processings are completed. Accordingly, even in the case wherein the interrupt requests are generated simultaneously from each of the interrupt request units 11, 12, 21 and 22, when one interrupt request has been processed, it is possible to execute the interrupt processing for interrupt request which is generated immediately thereafter and has a higher priority. The time necessary for the CPU 61 to detect the interrupt request and execute the set/reset processing is by far shorter than the time necessary for executing the interrupt processing itself, so that the processing time for one interrupt request may not be prolonged more than necessity.

In the aforesaid embodiment, as shown in a flow chart of Fig. 8, though interrupt factors are checked successively, it may be constructed, naturally, such that the interrupt factors are taken in by one input/output instruction with the same input address. When thus constructed, the time necessary for detecting the interrupt request is more shortened.

As particularly described heretofore, in an interrupt control circuit and a microcomputer system comprising the same, it is so constructed that the level of the interrupt request signal is instantaneously changed forcibly to a normal level from a request level, when the CPU receives the signal indicating the completion of interrupt processing being executed, so that the interrupt request is not locked and the interrupt requests generated continuously at delicate timings can be accepted reliably, and further, the time necessary for interrupt processing for interrupt request is shortened, thereby a problem of overhead seen in the conventional example is solved.

## Claims

1. An interrupt control circuit (1, 2) for requesting interrupt processing to a central processing unit (61) by changing a level of an interrupt request signal from one level to another, said central processing unit (61) being constituted in an edge-trigger mode under which generation of the interrupt request is detected by detecting a level change of said interrupt request signal, and outputting a predetermined signal in the case where the interrupt processing is completed after detecting the generation of the interrupt request and executing the interrupt processing, comprising:
detecting means (18, 28) for detecting said predetermined signal outputted from said central processing unit (61), said detecting means (18, 28) being composed of a flip-flop which is set/reset by a signal outputted from said central processing unit (61) at completion of the interrupt processing, and
level changing means (19, 29) for changing said interrupt request signal temporarily to said one level, in the case where said detecting means (18, 28) detects said predetermined signal, said level changing means (19, 29) being composed of a logical gate whose inputs are the output of said flip-flop (18, 28) and output of said interrupt request signal,
whereby the output of said logical gate (19, 29) is changed temporarily to said one level responsive to set/reset of said flip-flop (18, 28).

2. A microcomputer system, comprising a central processing unit (61) adapted for an edge-trigger mode under which generation of an interrupt request is detected by detecting a level change of an interrupt request signal, and which outputs a predetermined signal after completion of an interrupt processing following an interrupt request, and furthermore comprising an interrupt control circuit (1, 2) in accordance with claim 1.

## Patentansprüche

1. Unterbrechungssteuerschaltung (1, 2) zum Anfordern einer Unterbrechungsverarbeitung an einer zentralen Verarbeitungseinheit (61) durch Ändern eines Pegels eines Unterbrechungsanforderungssignals von einem Pegel zu einem anderen, wobei die zentrale Verarbeitungseinheit (61) auf eine flankenauslösende Weise gebildet ist, unter welcher ein Erzeugen der Unterbrechungsanforderung durch Erfassen einer Pegeländerung des Unterbrechungsanforderungssignals erfaßt wird, und die in dem Fall ein vorbestimmtes Signal ausgibt, in dem die Unterbrechungsverarbeitung nach Erfassen des Erzeugens der Unterbrechungsanforderung und Ausführen der Unterbrechungsverarbeitung beendet ist, die aufweist:
eine Erfassungseinrichtung (18, 28) zum Erfassen des aus der zentralen Verarbeitungseinheit (61) ausgegebenen vorbestimmten Signals, wobei die Erfassungseinrichtung (18, 28) aus einem Flipflop besteht, welches beim Beenden der Unterbrechungsverarbeitung von einem aus der zentralen Verarbeitungseinheit (61) ausgegebenen Signal gesetzt/rückgesetzt wird, und
eine Pegeländerungseinrichtung (19, 29) zum vorübergehenden Ändern des Unterbrechungsanforderungssignals zu dem ersten Pegel in dem Fall, in dem die Erfassungseinrichtung (18, 28) das vorbestimmte Signal erfaßt, wobei die Pegeländerungseinrichtung (19, 29) aus einem logischen Gatter besteht, dessen Eingangssignale die Ausgangssignale des Flipflop (18, 28) und die Ausgabe des Unterbrechungsanforderungssignals sind,
wodurch das Ausgangssignal des logischen Gatters (19, 29) als Reaktion auf ein Setzen/Rücksetzen des Flipflop (18, 28) vorübergehend zu dem ersten Pegel geändert wird.

2. Mikrocomputersystem, das eine zentrale Verarbeitungseinheit (61) aufweist, die zu einer flankenauslösenden Betriebsart in der Lage ist, unter welcher ein Erzeugen einer Unterbrechungsanforderung durch Erfassen einer Pegeländerung eines Unterbrechungsanforderungssignals erfaßt wird, und welche nach einem einer Unterbrechungsanforderung folgenden Beenden einer Unterbrechungsverarbeitung ein vorbestimmtes Signal ausgibt, und das weiterhin eine Unterbrechungssteuerschaltung (1, 2) nach Anspruch 1 aufweist.

## Revendications

1. Circuit de contrôle d'interruption (1, 2) pour requérir un traitement d'interruption à une unité de traitement centrale (61) en changeant un niveau d'un signal de requête d'interruption d'un niveau à un autre, ladite unité de traitement centrale (61) étant constituée dans un mode de déclenchement par front duquel une production de la requête d'interruption est détectée en détectant un changement de niveau dudit signal de requête d'interruption, pour produire un signal prédéterminé dans le cas où le traitement d'interruption est accompli après avoir détecté la production de la requête d'interruption et exécuter le traitement d'interruption, comprenant :
un moyen de détection (18, 28) pour détecter ledit signal prédéterminé produit par ladite unité de traitement centrale (61), ledit moyen de détection (18, 28) étant composé d'une bascule qui est initialisée/réinitialisée par un signal produit par ladite unité de traitement centrale (61) à l'achèvement du traitement d'interruption, et
un moyen de changement de niveau (19, 29) pour changer ledit signal de requête d'interruption temporairement audit un niveau, dans le cas où ledit moyen de détection (18, 28) détecte ledit signal prédéterminé, ledit moyen de changement de niveau (19, 29) étant composé d'une porte logique dont des entrées sont la sortie de ladite bascule (18, 28) et la sortie dudit signal de requête d'interruption,
de la sorte la sortie de ladite porte logique (19, 29) est changée temporairement audit un niveau en réponse à l'initialisation/réinitialisation de ladite bascule (18, 28).

2. Système à micro-ordinateur, comprenant une unité de traitement centrale (61) adaptée pour un mode de déclenchement par front sous lequel une production d'une requête d'interruption est détectée en détectant un changement de niveau d'un signal de requête d'interruption et qui produit un signal prédéterminé après achèvement d'un traitement d'interruption suivant une requête d'interruption et comprenant de plus un circuit de contrôle d'interruption (1, 2) selon la revendication 1.
